# EUROPÄISCHE PATENTSCHRIFT

(11) **EP 3 218 151 B1**
(45) Veröffentlichungstag und Bekanntmachung des Hinweises auf die Patenterteilung: **12.08.2020**
(21) Anmeldenummer: 15797030.2
(22) Anmeldetag: 05.11.2015
(51) Int. Cl.: B25J 9/16

(54) **VERFAHREN ZUM PENDELSCHWEISSEN**
METHOD FOR WEAVING WELDING
PROCÉDÉ DE SOUDAGE PENDULAIRE

(30) Priorität: 13.11.2014 DE 102014223203
(43) Veröffentlichungstag der Anmeldung: 20.09.2017
(73) Patentinhaber: KUKA Deutschland GmbH, 86165 Augsburg (DE)
(72) Erfinder: DZIERZEGA, Christoph, 86836 Graben (DE); WIEDENMANN, Martin, 89415 Lauingen (DE)
(74) Vertreter: Tillmann, Axel
(86) Internationale Anmeldenummer: PCT/EP2015/075860
(87) Internationale Veröffentlichungsnummer: WO 2016/075032

(56) Entgegenhaltungen:
- EP-A2- 0 512 583
- JP-A- 361 015 208

## Beschreibung

Die Erfindung betrifft ein Verfahren zum Pendelschweißen wenigstens eines Werkstücks mittels eines Schweißwerkzeugs, das durch einen Roboterarm eines Industrieroboters entlang einer programmierten Bahn automatisch relativ zum Werkstück bewegt wird und dabei an dem Werkstück eine Schweißnaht erzeugt.

Die EP 0 767 027 A2 beschreibt ein Verfahren zum Schweißen, insbesondere zum Lichtbogen-Schutzgasschweißen, von ein oder mehreren Werkstücken mit einem Schweißwerkzeug, das von einem Manipulator entlang einer vorgegebenen Bahn geführt wird, wobei das Schweißwerkzeug mechanische Pendelbewegungen ausführt, und beim mechanischen Pendeln das Schweißwerkzeug längs der verfolgten Bahn zeitweise beschleunigt und/oder gebremst und/oder angehalten wird und parallel dazu die Prozessparameter in der Höhe verändert werden, wobei die an der Schweißstelle eingebrachte Wärmeenergie in Anpassung an das Material und/oder die Geometrie der Werkstücke derart örtlich und/oder zeitlich verändert wird, dass die thermische Belastbarkeit der Werkstücke nicht überschritten wird.

Die EP 0 512 583 A2 beschreibt ein Verfahren zur Steuerung eines Schweißroboters für ein Pendelverschweißen eines ersten und eines zweiten Schweißelements durch einen Schweißroboter mit einem Schweißbrenner, der durch einen Schweißstrom erregt wird, und Armen zur beweglichen Halterung des Schweißbrenners unter Hin- und Herbewegen des Schweißbrenners in einer ersten Richtung, die im Wesentlichen senkrecht zu einer Schweißlinie verläuft, und einer zur ersten Richtung im Wesentlichen entgegengesetzten Richtung.

Aufgabe der Erfindung ist es, ein verbessertes Verfahren zum Pendelschweißen mittels eines robotergeführten Schweißwerkzeugs anzugeben, insbesondere die Programmierung eines Industrieroboters zu vereinfachen, der zum Pendelschweißen eingerichtet ist.

Die Aufgabe der Erfindung wird gelöst durch ein Verfahren zum Pendelschweißen wenigstens eines Werkstücks mittels eines Schweißwerkzeugs, das durch einen Roboterarm eines Industrieroboters entlang einer programmierten Bahn automatisch relativ zum Werkstück bewegt wird und dabei an dem Werkstück eine Schweißnaht erzeugt, aufweisend die Schritte:
- Ausführen einer programmierten Vorschubbewegung durch den Roboterarm entlang der programmierten Bahn,
- Ausführen einer Pendelbewegung des Schweißwerkzeugs synchron zur Vorschubbewegung,
- Abbremsen der Vorschubbewegung innerhalb einer Pendelperiode bis zu einem Stillstand bevor die Pendelbewegung ihren nächsten Umkehrpunkt erreicht hat,
- Bestimmen eines Restauslenkungswertes, welcher durch eine erste Position im Stillstand und einer zweiten Position im nächsten Umkehrpunkt der Pendelbewegung definiert ist,
- Abbremsen der Vorschubbewegung in einer folgenden Pendelperiode mit einer in Abhängigkeit des Restauslenkungswertes aus einer vorhergehenden Pendelperiode verzögerten Bremsbewegung.

Roboterarme mit zugehörigen Robotersteuerungen, insbesondere Industrieroboter sind Arbeitsmaschinen, die zur automatischen Handhabung und/oder Bearbeitung von Objekten mit Werkzeugen ausgerüstet werden können und in mehreren Bewegungsachsen beispielsweise hinsichtlich Orientierung, Position und Arbeitsablauf programmierbar sind. Industrieroboter weisen üblicherweise einen Roboterarm mit mehreren über Gelenke verbundene Glieder und programmierbare Robotersteuerungen (Steuervorrichtungen) auf, die während des Betriebs die Bewegungsabläufe des Roboterarms automatisch steuern bzw. regeln. Die Glieder werden über Antriebe, insbesondere elektrische Antriebe, die von der Robotersteuerung angesteuert werden, insbesondere bezüglich der Bewegungsachsen des Industrieroboters, welche die Bewegungsfreiheitsgrade der Gelenke repräsentieren, bewegt.

Ein mehrere über Gelenke verbundene Glieder aufweisender Roboterarm kann als ein Knickarmroboter mit mehreren seriell nacheinander angeordneten Gliedern und Gelenken konfiguriert sein.

Bei Schweißapplikationen kann das sogenannte "verzögerte Pendeln" zum Einsatz kommen. Das Schweißwerkzeug, beispielsweise der Schweißbrenner wird dabei synchron bzw. zeitgleich, d.h. zeitlich aufeinander abgestimmt zu einer Vorwärtsbewegung in eine Pendelbewegung gebracht und an den Umkehrpunkten verlangsamt oder angehalten, um beispielsweise mehr Schweißmaterial oder Schweißenergie darin einzubringen. Um die Roboterbewegung exakt an den Umkehrpunkten der Pendelbewegung anzuhalten, muss programmtechnisch die Bremsanweisung für die Bewegung im Vorlauf unter Berücksichtigung der Bewegungsdynamik eingeleitet werden. Bisher sind empirische, aus der Bewegungsgeschwindigkeit, der Pendelfrequenz und Amplitude ermittelten Zeit- oder Weg-Konstanten bekannt, mit deren Hilfe der Zeitpunkt für Bremseinleitung bestimmt wird. Da die Zeit- oder Weg-Konstanten von den Bewegungsparametern, wie der Bewegungsgeschwindigkeit, der Pendelfrequenz und Amplitude abhängen, müssen sie stets an die jeweilige Situation angepasst werden, was nachteilig ist.

Mit dem erfindungsgemäßen Verfahren kann eine erforderliche Anpassung der Zeit- oder Weg-Konstanten an die jeweiligen Bewegungsparameter, wie die Bewegungsgeschwindigkeit, die Pendel-Frequenz und die Amplitude entfallen. Stattdessen kann der Zeitpunkt für das Einleiten der Bremsanweisung automatisch bestimmt, insbesondere berechnet werden. Eine erste Bremsung kann über eine Wegkonstante eingeleitet werden, um das Schweißwerkzeug noch vor dem Erreichen des Umkehrpunktes des Pendelprofiles anzuhalten. Nachdem diese Bremsung und jede folgende Bremsung abgeschlossen werden, wird beispielsweise die Wegdifferenz zum Umkehrpunkt des Pendelprofiles automatisch ermittelt. Die Wegdifferenz kann dann als Eingangsparameter für den Algorithmus zur Berechnung des Schaltpunktes für die darauf folgende Bremsung dienen.

Die programmierte Bahn des Industrieroboters, der das Schweißwerkzeug, das beispielsweise eine Lichtbogenschweißdüse sein kann, bewegt, führt beispielsweise entlang eines Schweißstoßes in einer Vorschubrichtung, um eine Schweißnaht zu erzeugen. Die Vorschubbewegung ist also das Verstellen der Lichtbogenschweißdüse relativ zum Werkstück parallel entlang des Schweißstoßes in der Vorschubrichtung. Außer dieser Vorschubbewegung führt das Schweißwerkzeug noch eine Pendelbewegung aus. Die Pendelbewegung kennzeichnet sich durch ein Verstellen des Schweißwerkzeugs relativ zum Werkstück in einer zum Schweißstoß senkrechten Richtung. Die Pendelbewegung wird synchron bzw. zeitgleich, d.h. zeitlich aufeinander abgestimmt zur programmierten Vorschubbewegung automatisch ausgeführt.

Die Pendelbewegung kann in einer ersten Ausführungsform im Wesentlichen in einer zur Oberfläche des Werkstücks parallelen Ebene senkrecht zur Vorschubbewegung in einer Pendelrichtung ausgeführt werden. Das Pendeln in Pendelrichtung kann von dem Industrieroboter ausgeführt werden, indem wenigstens zwei oder mehrere der Gelenke des Industrieroboters um die jeweiligen Achsen mittels der jeweiligen Antriebsmotoren verstellt werden, derart, dass ein Werkzeugbezugspunkt des Schweißwerkzeugs in kartesischen Koordinatenrichtungen eine Bewegung in einer Ebene gemäß eines Pendelmusters durchführt. Das Pendelmuster kann beispielsweise eine Sinuswelle oder eine Zick-Zack-Linie sein.

Alternativ zu einer Bewegung in einer Ebene in kartesischen Koordinatenrichtungen kann das Pendeln in Pendelrichtung von dem Industrieroboter dadurch ausgeführt werden, dass nur eine Achse des Industrieroboters, die parallel zur Vorschubrichtung bzw. parallel zum Stirnstoß ausgerichtet ist, hin- und hergedreht wird, so dass der Schaft des Schweißwerkzeugs tatsächlich die einem physikalischen Pendel entsprechende Pendelbewegung ausführt. Die Pendelbewegung wird also in diesen Fällen quer zur Vorschubrichtung ausgeführt.

Kommt das Schweißwerkzeug nach Abschluss des Abbremsens nicht genau im Umkehrpunkt zum Stehen, sondern etwas davor, so ergibt sich ein Restauslenkungswert, welcher durch eine erste Position im Stillstand und einer zweiten Position im nächsten Umkehrpunkt der Pendelbewegung definiert ist. Im Falle eines Restauslenkungsweges ist dies also beispielsweise die verbleibende Wegdifferenz zwischen der ersten Position und der zweiten Position. Erfindungsgemäß wird dann in einer folgenden Pendelperiode mit einer in Abhängigkeit des Restauslenkungswertes aus der vorhergehenden Pendelperiode verzögerten Bremsbewegung ein Abbremsen der Vorschubbewegung durchgeführt. Der Restauslenkungswert kann alternativ zu einem Restauslenkungsweg auch eine Restauslenkungsdauer sein.

Normalerweise ist eine grundlegende Vorschubbewegung durch eine konstante Geschwindigkeit gekennzeichnet, mit welcher der Roboterarm das Schweißwerkzeug parallel zu einer Kante oder einem Spalt des Werkstücks bewegt wird, an welcher Kante oder welchem Spalt eine Schweißnaht durch das Schweißwerkzeug erzeugt werden soll. Diese grundlegende Vorschubbewegung ist als eine programmierte Bahn in einem Roboterprogramm mittels wenigstens eines Programmbefehls üblicherweise vorgegeben.

In einer Robotersteuerungssoftware kann neben solchen allgemeinen Programmbefehlen zur Erzeugung von programmierten Bahnen auch eine Schweißanwendung Teil der Robotersteuerungssoftware sein, durch welche Schweißanwendung zusätzliche schweißanwendungsspezifische Programmbefehle bereitgestellt werden. Eine spezielle Gattung derartiger schweißanwendungsspezifische Programmbefehle können sich mit Schweißnahtmustern befassen. Dabei können mehrere verschiedene, auswählbare Schweißnahtmuster vorgegeben sein. Solche Schweißnahtmuster bestehen im Allgemeinen aus einer wiederholten Abfolge, d.h. aus Perioden von gleichartigen Einzelmustern. Dies kann beispielsweise eine Sinuswelle, eine Dreieckform (Zick-Zack-Linie), eine Trapezform und/oder seine Spiralform sein. Beim Pendelschweißen wird eine entsprechende Pendelbewegung des Schweißwerkzeugs entsprechend einem solchen Schweißnahtmuster in Form einer Pendelbewegung mit der Vorschubbewegung überlagert.

In einer speziellen Art des Pendelschweißens wird zur Erzielung besonderer Schweißnähte die Bewegung des Schweißwerkzeugs an den Umkehrpunkten des Schweißnahtmusters angehalten, so dass dort besonders viel Schweißenergie eingetragen wird. Unter einem Umkehrpunkt kann beispielsweise im Falle einer Sinusschwingung die Amplitude verstanden werden. Im Falle einer Dreieckform (Zick-Zack-Linie) werden die Umkehrpunkte durch die Spitzen der Dreieckformen bzw. der Zick-Zack-Linie gebildet.

Um nun das Schweißwerkzeug an den Umkehrpunkten zumindest deutlich zu verlangsamen oder sogar vollständig anzuhalten, beispielsweise für die Dauer von etwa 0,1 bis etwa 2,0 Sekunden, insbesondere für die Dauer von etwa 1,0 Sekunde anzuhalten, wird die Vorschubbewegung abgebremst. Ein Abbremsen kann durch einen im Roboterprogramm separat vorgesehenen Bremsbefehl ausgelöst, d.h. gestartet werden. Ein Abbremsen erfolgt dann gemäß einem Bremsprofil. Ein Bremsprofil kennzeichnet sich im Allgemeinen durch einen Zeitpunkt des Bremsbeginns, durch die Ausgangsgeschwindigkeit und die Bremsdauer bis zum Stillstand, also die Höhe der negativen Beschleunigung.

In Abhängigkeit der Art des Bremsprofils kommt das Schweißwerkzeug also früher oder später in einer Vorschubposition zum Stehen. Idealerweise soll das Schweißwerkzeug genau im Umkehrpunkt der Pendelbewegung zum Stillstand kommen. Nachdem das Schweißwerkzeug im Umkehrpunkt oder zumindest nahe des Umkehrpunkts zum Stehen gekommen ist, soll das Schweißwerkzeug dort beispielsweise für die Dauer von etwa 0,1 bis etwa 2,0 Sekunden, insbesondere für die Dauer von etwa 1,0 Sekunde verweilen und fährt dann wieder automatisch gemäß dem Roboterprogramm an, um in einer folgenden Pendelperiode eine folgende Pendelbewegung in Form des gewählten Schweißnahtmusters auszuführen.

Ist das Schweißwerkzeug in einer ersten Pendelperiode gemäß eines ersten Bremsprofils nicht genau im Umkehrpunkt zum Stehen gekommen, sondern unter Verbleib eines Restauslenkungsweges bzw. einer Restauslenkungszeit vor Erreichen des Umkehrpunktes zum Stehen gekommen, so wird in einer folgenden, zweiten Pendelperiode gemäß eines zweiten Bremsprofils das Schweißwerkzeug später oder langsamer abgebremst, so dass in der zweiten Pendelperiode das Schweißwerkzeug später zum Stehen kommt, als in der ersten Pendelperiode. Dies bedeutet, dass in der zweiten Pendelperiode eine gegenüber der ersten Pendelperiode verzögerte Bremsbewegung durchgeführt wird. Unter einer verzögerten Bremsbewegung wird also nicht nur verstanden, dass die Bremsdauer bis zum Stillstand verlängert wird, also die Höhe der negativen Beschleunigung reduziert wird, sondern wird auch verstanden, dass alternativ oder ergänzend zur Anpassung der Bremsdauer insbesondere der Zeitpunkt des Bremsbeginns auf einen späteren Zeitpunkt gelegt wird. Dies alles kann automatische erfolgen, durch einen Steuerungsalgorithmus insbesondere in der Robotersteuerung, der gemäß einem der erfindungsgemäßen Verfahren ausgebildet und/oder eingerichtet ist.

Die verzögerte Bremsbewegung kann derart ausgelegt sein, dass die Vorschubbewegung mit einem geringeren Restauslenkungswert vor dem Umkehrpunkt der Pendelbewegung zum Stillstand kommt, als eine zuvor ausgeführte Vorschubbewegung einer vorhergehenden Pendelperiode.

Mit dem erfindungsgemäßen Verfahren kann somit automatisch die Bremsbewegung optimiert werden, um den zeitlichen Moment und/oder die Position des Stillstandes des Schweißwerkzeugs zumindest möglichst nahe oder sogar genau auf den Umkehrpunkt der Pendelbewegung zu legen. Durch eine solche automatische Annäherung der Position des Stillstandes des Schweißwerkzeugs an den Umkehrpunkt der Pendelbewegung können ansonsten manuell notwendige Einstellmaßnahmen oder Anpassungen des Roboterprogramms entfallen.

Der Restauslenkungswert kann ein von der ersten Position im Stillstand auf die zweite Position im nächsten Umkehrpunkt der Pendelbewegung hinführender Restauslenkungsweg auf der programmierten Bahn sein.

Alternativ zu einem Restauslenkungsweg kann der Restauslenkungswert eine von der ersten Position in die zweite Position im nächsten Umkehrpunkt der Pendelbewegung hinführende Restauslenkungsdauer des programmierten Bahnverlaufs sein.

Der Restauslenkungswert, insbesondere der Restauslenkungsweg oder die Restauslenkungsdauer kann aus der aktuellen Pendelauslenkung des Schweißwerkzeugs und der maximalen Pendelauslenkung im Umkehrpunkt der Pendelbewegung bestimmt werden.

So kann beispielsweise die Robotersteuerung und/oder eine Robotersteuerungssoftware ausgebildet und/oder eingerichtet sein, der maximalen Pendelauslenkung den Wert 1 zuzuordnen und einem nicht ausgelenkten Zustand den Wert 0 zuzuordnen. Analog eines Prozentwertes zwischen 0% und 100% kann somit der aktuellen Pendelauslenkung ein Zwischenwert zwischen 0 und 1 zugeordnet werden, beispielsweise bei 50%-iger Pendelauslenkung der Wert 0,5 und bei 75%-iger Pendelauslenkung der Wert 0,75. Auf Grundlage dieses Faktors kann in einem vorhandenen Algorithmus zur Bestimmung, insbesondere zur Berechnung des Bremseinleitungszeitpunktes und/oder der Bremsdauer bis zum Stillstand aus der gegebenen Fahrgeschwindigkeit ein neuer, angepasster Bremseinleitungszeitpunkt und/oder eine neue, angepasste Bremsdauer berechnet, oder zumindest extrapoliert werden.

Die aktuelle Pendelauslenkung des Schweißwerkzeugs kann in der ersten Position des Stillstands bestimmt, insbesondere gemessen werden, mit der maximalen Pendelauslenkung im Umkehrpunkt der Pendelbewegung in ein Verhältnis gesetzt werden und die verzögerte Bremsbewegung auf Grundlage dieses Verhältniswertes und der zum Erreichen der ersten Position im Stillstand bereits ausgeführten Bremsbewegung bestimmt werden.

Ein gegenüber einem ersten Bremsprofil geändertes zweites Bremsprofil kann also in seinem Zeitpunkt des Bremsbeginns und/oder in der Dauer seiner Bremsbewegung bis zum Stillstand geändert sein.

Das gegenüber dem ersten Bremsprofil geänderte zweite Bremsprofil kann durch eine Anpassung des Bremsbeginns geändert werden und zwar dadurch, dass der in einem Roboterprogramm angegebene Zeitpunkt oder angegebene Auslenkungspositionswert der ursprünglichen Bremsbewegung auch für die folgende Bremsbewegung mit dem geänderten zweiten Bremsprofil zum Ansteuern des Roboterarms herangezogen wird, jedoch unter Berücksichtigung eines hinzugefügten Offsetwertes, der in Abhängigkeit des Restauslenkungswertes bestimmt ist.

In einer ersten allgemein anwendbaren Variante kann die Pendelbewegung quer zur Vorschubrichtung ausgeführt werden.

In einer alternativen oder einer die erste Variante ergänzenden zweiten allgemein anwendbaren Variante kann die Pendelbewegung längs der Vorschubrichtung ausgeführt werden. Es kann also auch ein gleichzeitiges Längspendeln und Querpendeln vorgesehen sein.

Ein konkretes Ausführungsbeispiel der Erfindung ist in der nachfolgenden Beschreibung unter Bezugnahme auf die beigefügten Figuren näher erläutert. Konkrete Merkmale dieses exemplarischen Ausführungsbeispiels können unabhängig davon, in welchem konkreten Zusammenhang sie erwähnt sind, gegebenenfalls auch einzeln oder in Kombination betrachtet, allgemeine Merkmale der Erfindung darstellen.

Es zeigen:
- Fig. 1: eine perspektivische Darstellung eines beispielhaften, ein Schweißwerkzeug tragenden Industrieroboters, aufweisend einen Roboterarm und eine diesen Roboterarm ansteuernde Robotersteuerung,
- Fig. 2: eine perspektivische vergrößerte Teildarstellung einer Schweißdüse des Schweißwerkzeugs gemäß Fig. 1 an einem Werkstück,
- Fig. 3: eine Darstellung eines Ablaufschemas der Schritte eines erfindungsgemäßen Verfahrens, und
- Fig. 4: eine schematische Darstellung einer einzelnen Pendelperiode mit einer überlagerten Bewegung einer Vorschubbewegung und einer Pendelbewegung.

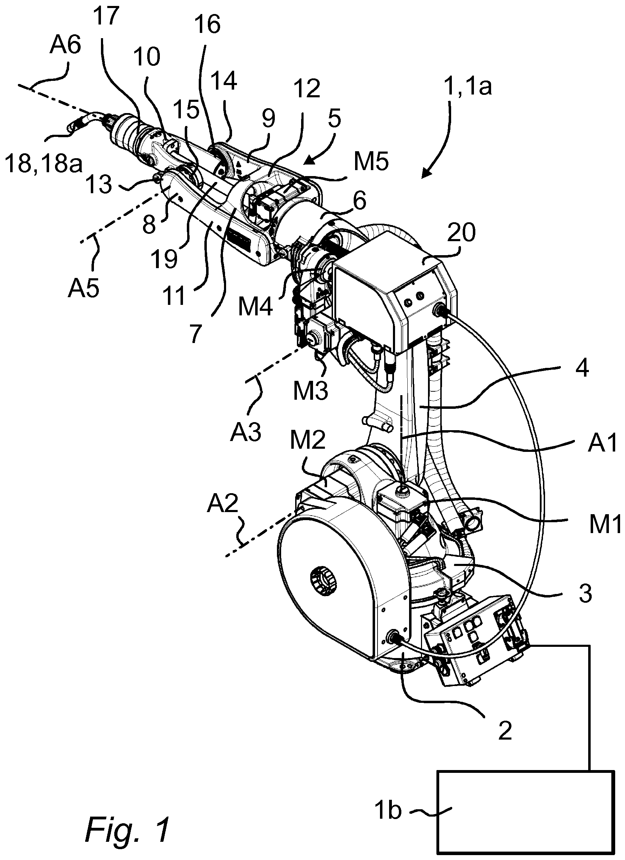

Die Fig. 1 zeigt einen Industrieroboter 1, aufweisend einen Roboterarm 1a und eine den Roboterarm 1a ansteuernde Robotersteuerung 1b mit dem Roboterarm 1a umfassend ein Grundgestellt 2 an dem ein Karussell 3 um eine erste vertikale Achse A1 drehbar gelagert und mittels eines ersten Antriebsmotors M1 drehangetrieben ist. An dem Karussell 3 ist eine Schwinge 4 um eine zweite horizontale Achse A2 auf und ab schwenkbar gelagert und mittels eines zweiten Antriebsmotors M2 drehangetrieben. Die Schwinge 4 trägt einen Armausleger 5, der um eine dritte horizontale Achse A3 schwenkbar gelagert und mittels eines dritten Antriebsmotors M3 drehangetrieben ist. Der Armausleger 5 weist einen Flansch 6 auf, der den Armausleger 5 an die Schwinge 4 koppelt. An einer der Schwinge 4 abgewandten Seite des Flansches 6 ist eine vierte Achse A4 vorgesehen, welche in Längserstreckung des Armauslegers 5 verläuft und über einen vierten Antriebsmotors M4 einen Grundkörper 7 des Armauslegers 5 drehantreibt. Von dem Grundkörper 7 erstrecken sich ein erster Schenkel 8 des Armauslegers 5 und ein zweiter Schenkel 9 des Armauslegers 5 gabelförmig in Richtung einer Hand 10 des Industrieroboters 1 nach vorne. Die beiden Schenkel 8 und 9 weisen jeweils ein festes Ende 11, 12 und ein freies Ende 13, 14 auf. Über die festen Enden 11, 12 sind die beiden Schenkel 8 und 9 an dem Grundkörper 7 festgelegt. Die freien Enden 13, 14 tragen eine Lagerung für freie Enden 15 und 16 der Hand 10. Die Lagerung definiert eine fünfte Achse A5 des Industrieroboters 1, um welche die Hand 10 mittels eines fünften Antriebsmotors M5 schwenkbar bewegt werden kann. Ergänzend weist die Hand 10 eine sechste Achse A6 auf, um einen Befestigungsflansch 17 mittels eines sechsten Antriebsmotors M6 drehbar antreiben zu können. Im dargestellten Beispiel trägt der Befestigungsflansch 17 eine Lichtbogenschweißdüse 18a, die ein Schweißwerkzeug 18 des Industrieroboters 1 repräsentiert. Von der Lichtbogenschweißdüse 18a läuft eine Leitungsanordnung 19 in einem zentralen Bereich des Armauslegers 5 nach hinten zu einer Prozesssteuervorrichtung 20. Über die Prozesssteuervorrichtung 20 kann beispielsweise Schutzgas und ein Schweißdraht an die Lichtbogenschweißdüse 18a zugeführt werden.

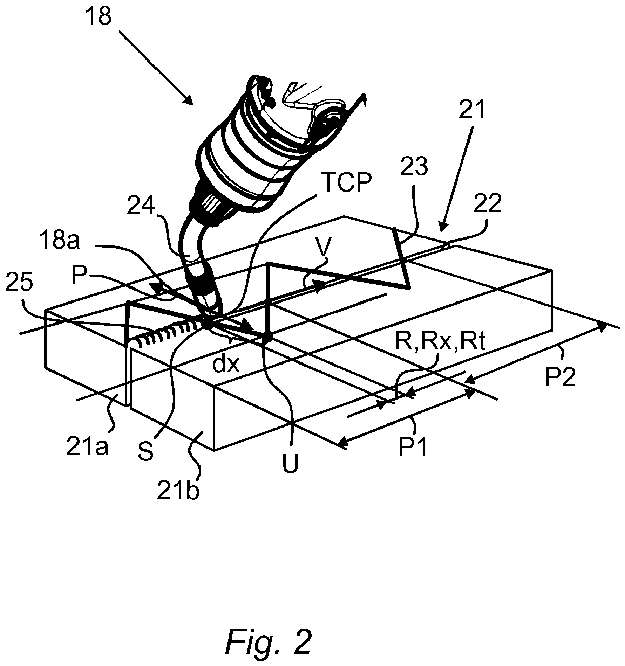

In der Fig. 2 ist die beispielhafte Lichtbogenschweißdüse 18a des Schweißwerkzeugs 18 gemäß Fig. 1 an einem Werkstück 21 in einer repräsentativen Stillstandposition gezeigt. Das Werkstück 21 umfasst ein erstes Bauteil 21a, das mit einem zweiten Bauteil 21b entlang eines Stirnstoßes 22 durch Schweißen verbunden werden soll.

Die programmierte Bahn des Industrieroboters 1, der die Lichtbogenschweißdüse 18a bewegt, führt entlang des Stirnstoßes 22 in einer Vorschubrichtung V, um eine Schweißnaht 25 zu erzeugen. Die Vorschubbewegung ist also das Verstellen der Lichtbogenschweißdüse 18a relativ zum Werkstück 21 parallel entlang des Stirnstoßes 22 in der Vorschubrichtung V. Außer dieser Vorschubbewegung führt die Lichtbogenschweißdüse 18a noch eine Pendelbewegung aus. Die Pendelbewegung kennzeichnet sich durch ein Verstellen der Lichtbogenschweißdüse 18a relativ zum Werkstück 21 in einer zum Stirnstoß 22 senkrechten Richtung. Im Falle des vorliegenden Ausführungsbeispiels wird die Pendelbewegung im Wesentlichen in einer zur Oberfläche des Werkstücks 21 parallelen Ebene senkrecht zur Vorschubbewegung in einer Pendelrichtung P ausgeführt. Das Pendeln in Pendelrichtung P kann von dem Industrieroboter 1 ausgeführt werden, indem wenigstens zwei oder mehrere der Gelenke des Industrieroboters 1 um die jeweiligen Achsen A1-A6 mittels der jeweiligen Antriebsmotoren M1-M6 verstellt werden, derart, dass ein Werkzeugbezugspunkt TCP der Lichtbogenschweißdüse 18a in kartesischen Koordinatenrichtungen eine Bewegung in einer Ebene gemäß eines Pendelmusters durchführt. Das Pendelmuster kann beispielsweise eine Sinuswelle oder wie in Fig. 2 dargestellt eine Zick-Zack-Linie 23 sein. Alternativ zu einer Bewegung in einer Ebene in kartesischen Koordinatenrichtungen kann das Pendeln in Pendelrichtung P von dem Industrieroboter 1 dadurch ausgeführt werden, dass nur eine Achse des Industrieroboters 1, die parallel zur Vorschubrichtung V bzw. parallel zum Stirnstoß 22 ausgerichtet ist, hin- und hergedreht wird, so dass der Schaft 24 der Lichtbogenschweißdüse 18a tatsächlich die einem physikalischen Pendel entsprechende Pendelbewegung ausführt. Die Pendelbewegung wird also in diesen Fällen quer zur Vorschubrichtung ausgeführt.

Die Fig. 2 zeigt das Schweißwerkzeug 18, d.h. die Lichtbogenschweißdüse 18a in einer ersten Vorschubposition S im Stillstand, in der das Schweißwerkzeug 18, d.h. die Lichtbogenschweißdüse 18a zum Stillstand gekommen ist, nach einem Abbremsen der Vorschubbewegung gemäß eines ersten Bremsprofils innerhalb einer Pendelperiode bis zum Stillstand bevor die Pendelbewegung ihren nächsten Umkehrpunkt U erreicht hat.

Kommt das Schweißwerkzeug 18, d.h. die Lichtbogenschweißdüse 18a nach Abschluss des Abbremsens nicht genau im Umkehrpunkt U zum Stehen, sondern etwas davor, wie in Fig. 2 dargestellt, so ergibt sich ein Restauslenkungswert R, welcher durch eine erste Position S im Stillstand und einer zweiten Position U im nächsten Umkehrpunkt der Pendelbewegung definiert ist. Im Falle eines Restauslenkungsweges Rx ist dies also beispielsweise die verbleibende Wegdifferenz dx zwischen der ersten Position S und der zweiten Position U. Erfindungsgemäß wird dann in einer folgenden Pendelperiode P2 mit einer in Abhängigkeit des Restauslenkungswertes R verzögerten Bremsbewegung ein Abbremsen der Vorschubbewegung durchgeführt. Der Restauslenkungswert R kann aber alternativ zu einem Restauslenkungsweg Rx auch eine Restauslenkungsdauer Rt sein. Generell sind die Abmessung der Schweißnaht 25, der Zick-Zack-Linie 23 und der Bauteile 21a, 21b nicht maßstabsgetreu und auch nicht im tatsächlichen Größenverhältnis dargestellt, sondern zur Veranschaulichung und besseren Sichtbarkeit entsprechend, wie dargestellt, angepasst.

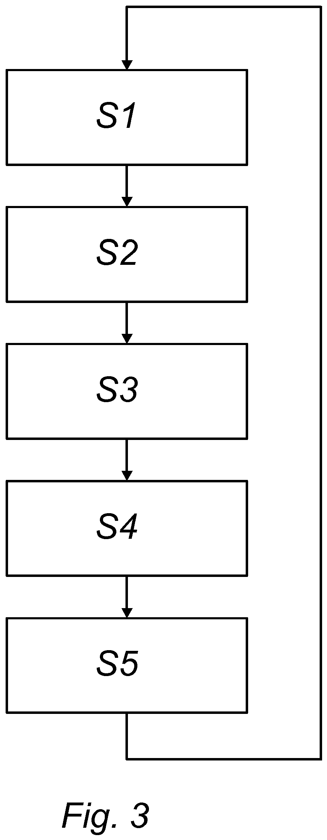

Demgemäß zeigt die Fig. 3 in einem Ablaufschema ein Verfahren zum Pendelschweißen wenigstens eines Werkstücks 21 mittels eines Schweißwerkzeugs 18, das durch einen Roboterarm 1a eines Industrieroboters 1 entlang einer programmierten Bahn automatisch relativ zum Werkstück 21 bewegt wird und dabei an dem Werkstück 21 eine Schweißnaht 25 erzeugt, aufweisend die Schritte:
Ausführen einer Vorschubbewegung durch den Roboterarm 1a entlang der programmierten Bahn (S1),

Ausführen einer Pendelbewegung des Schweißwerkzeugs 18 während der Vorschubbewegung (S2),

Abbremsen der Vorschubbewegung gemäß eines ersten Bremsprofils innerhalb einer Pendelperiode P1 bis zu einem Stillstand S bevor die Pendelbewegung ihren nächsten Umkehrpunkt U erreicht hat (S3),

Bestimmen eines Restauslenkungswertes R, welcher durch eine erste Position S' im Stillstand und einer zweiten Position (U') im nächsten Umkehrpunkt der Pendelbewegung definiert ist (S4), und
Abbremsen der Vorschubbewegung in einer folgenden Pendelperiode P2 mit einer in Abhängigkeit des Restauslenkungswertes R aus der vorhergehenden Pendelperiode verzögerten Bremsbewegung (S5).

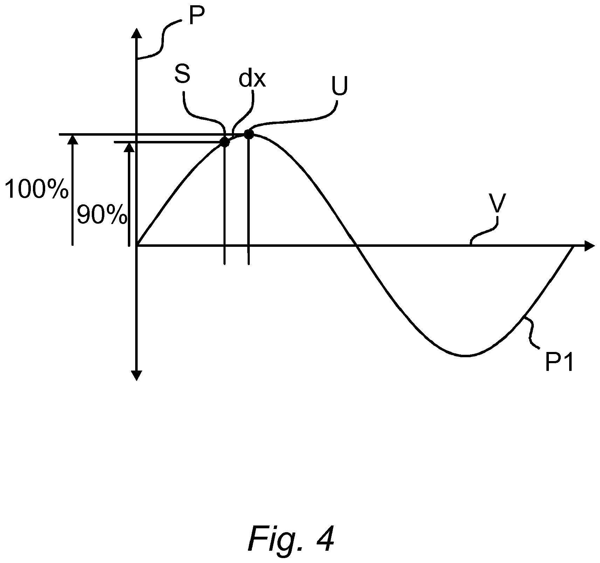

In der Fig. 4 ist schematisch eine einzelne Pendelperiode P1 mit einer überlagerten Bewegung einer Vorschubbewegung V und einer Pendelbewegung P dargestellt. Der Restauslenkungswert R, der insbesondere ein Restauslenkungsweg Rx oder eine Restauslenkungsdauer Rt sein kann, bestimmt sich aus der aktuellen Pendelauslenkung in der ersten Position S im Stillstand des Schweißwerkzeugs 18 und der maximalen Pendelauslenkung im Umkehrpunkt U der Pendelbewegung, im Falle des vorliegenden Ausführungsbeispiels also aus der maximalen Pendelauslenkung im Umkehrpunkt U, die mit 100% angegeben ist und der aktuellen Pendelauslenkung in der ersten Vorschubposition S im Stillstand des Schweißwerkzeugs 18, die mit beispielhaften 90% angegeben ist. Zur Erreichung des gewünschten Umkehrpunktes U im Stillstand verbleibt im vorliegenden Ausführungsbeispiel also ein Restauslenkungswert R von 10%.

Die aktuelle Pendelauslenkung in der ersten Position S im Stillstand des Schweißwerkzeugs 18 ist also mit der maximalen Pendelauslenkung im Umkehrpunkt U der Pendelbewegung in ein Verhältnis gesetzt. Die verzögerte Bremsbewegung wird auf Grundlage dieses Verhältniswertes (90 zu 100) und der zum Erreichen der ersten Position im Stillstand bereits ausgeführten Bremsbewegung bestimmt.

Das gegenüber dem ersten Bremsprofil geänderte zweite Bremsprofil kann beispielsweise durch eine Anpassung des Bremsbeginns geändert werden und zwar dadurch, dass der in einem Roboterprogramm angegebene Zeitpunkt oder angegebene Pendelpositionswert der ursprünglichen Bremsbewegung auch für die folgende Bremsbewegung mit dem geänderten zweiten Bremsprofil zum Ansteuern des Roboterarms herangezogen wird, jedoch unter Berücksichtigung eines hinzugefügten Offsetwertes (10%), der in Abhängigkeit des Restauslenkungswertes bestimmt ist.

## Patentansprüche

1. Verfahren zum Pendelschweißen wenigstens eines Werkstücks (21) mittels eines Schweißwerkzeugs (18), das durch einen Roboterarm (1a) eines Industrieroboters (1) entlang einer programmierten Bahn automatisch relativ zum Werkstück (21) bewegt wird und dabei an dem Werkstück (21) eine Schweißnaht (25) erzeugt, aufweisend die Schritte in wiederkehrender Abfolge:
- Ausführen einer programmierten Vorschubbewegung durch den Roboterarm (1a) entlang der programmierten Bahn (S1),
- Ausführen einer Pendelbewegung des Schweißwerkzeugs (18) synchron zur Vorschubbewegung (S2), **gekennzeichnet durch die Schritte:**
- Abbremsen der Vorschubbewegung gemäß eines ersten Bremsprofils innerhalb einer Pendelperiode (P1) bis zu einem Stillstand (S) bevor die Pendelbewegung ihren nächsten Umkehrpunkt (U) erreicht hat(S3),
- Bestimmen eines Restauslenkungswertes (R), welcher durch eine erste Position (S') im Stillstand und einer zweiten Position (U') im nächsten Umkehrpunkt der Pendelbewegung definiert ist (S4),
- Abbremsen der Vorschubbewegung in einer folgenden Pendelperiode (P2) mit einer in Abhängigkeit des Restauslenkungswertes (R) aus einer vorhergehenden Pendelperiode verzögerten Bremsbewegung (S5).

2. Verfahren zum Pendelschweißen nach Anspruch 1, bei dem die verzögerte Bremsbewegung derart ausgelegt ist, dass die Vorschubbewegung mit einem geringeren Restauslenkungswert (R) vor dem Umkehrpunkt der Pendelbewegung zum Stillstand kommt, als eine zuvor ausgeführte Vorschubbewegung einer vorhergehenden Pendelperiode (P1).

3. Verfahren zum Pendelschweißen nach Anspruch 1 oder 2, bei dem der Restauslenkungswert (R) ein von der ersten Position (S) im Stillstand auf die zweite Position (U) im nächsten Umkehrpunkt der Pendelbewegung hinführender Restauslenkungsweg (Rx) auf der programmierten Bahn ist.

4. Verfahren zum Pendelschweißen nach Anspruch 1 oder 2, bei dem der Restauslenkungswert (R) eine von der ersten Position (S) in die zweite Position (U) im nächsten Umkehrpunkt der Pendelbewegung hinführende Restauslenkungsdauer (Rt) des programmierten Bahnverlaufs ist.

5. Verfahren zum Pendelschweißen nach einem der Ansprüche 1 bis 4, bei dem der Restauslenkungswert (R), insbesondere der Restauslenkungsweg (Rx) oder die Restauslenkungsdauer (Rt) aus der aktuellen Pendelauslenkung des Schweißwerkzeugs (18) und der maximalen Pendelauslenkung im Umkehrpunkt der Pendelbewegung bestimmt wird.

6. Verfahren zum Pendelschweißen nach Anspruch 5, bei dem die aktuelle Pendelauslenkung des Schweißwerkzeugs (18) in der ersten Position (S) des Stillstands bestimmt, insbesondere gemessen wird, mit der maximalen Pendelauslenkung im Umkehrpunkt der Pendelbewegung in ein Verhältnis gesetzt wird und die verzögerte Bremsbewegung auf Grundlage dieses Verhältniswertes und der zum Erreichen der ersten Position (S) im Stillstand bereits ausgeführten Bremsbewegung bestimmt wird.

7. Verfahren zum Pendelschweißen nach einem der Ansprüche 1 bis 6, bei dem ein gegenüber einem ersten Bremsprofil geändertes zweites Bremsprofil in seinem Zeitpunkt des Bremsbeginns und/oder in der Dauer seiner Bremsbewegung bis zum Stillstand geändert ist.

8. Verfahren zum Pendelschweißen nach Anspruch 7, bei dem das gegenüber dem ersten Bremsprofil geänderte zweite Bremsprofil durch eine Anpassung des Bremsbeginns geändert wird und zwar dadurch, dass der in einem Roboterprogramm angegebene Zeitpunkt oder angegebene Auslenkungspositionswert der ursprünglichen Bremsbewegung auch für die folgende Bremsbewegung mit dem geänderten zweiten Bremsprofil zum Ansteuern des Roboterarms (1a) herangezogen wird, jedoch unter Berücksichtigung eines hinzugefügten Offsetwertes, der in Abhängigkeit des Restauslenkungswertes (R) bestimmt ist.

9. Verfahren zum Pendelschweißen nach einem der Ansprüche 1 bis 8, bei dem die Pendelbewegung quer zur Vorschubrichtung ausgeführt wird.

10. Verfahren zum Pendelschweißen nach einem der Ansprüche 1 bis 9, bei dem die Pendelbewegung längs der Vorschubrichtung ausgeführt wird.

## Claims

1. Method for pendulum welding at least one workpiece (21) by means of a welding (18) tool, the pendulum by a robot arm (1a) of an (1) industrial robot is moved automatically relative to the workpiece (21) along a programmed path and thereby to produce a weld seam (25) on the workpiece (21), comprising the steps in recurring order:
- Performing a programmed motion by the robot arm (1a) along the programmed path (S1),
- Performing a pendulum motion of the welding (18) tool in synchronism with the advance movement (S2),
**characterized by** the steps:
- Braking of the forward movement according to a first braking profile with in a pendulum period (P1) up to a standstill (S) before the pendulum movement has reached its next reversal point (U) (S3)
- Determining a residual deflection value (R), which by a first position (S') is at a standstill and a second position (U') at the next inversion point is defined in part of the pendulum movement (S4),
- Braking in the feed movement in a subsequent pendulum period (P2) having a function of the residual deflection value (R) from a previous pendulum period delayed braking movement (S5).

2. Method for pendulum welding according to claim 1, in which the delayed braking movement is designed in such a way that the feed movement comes to a standstill with a lower residual deflection value (R) before the reversal point of the pendulum movement than a previously executed feed movement of a preceding pendulum period (P1).

3. Method for the pendulum welding according to claim 1 or 2, wherein said residual deflection value (R) is a residual deflection path (Rx) on the programmed path leading from the first position (S) at standstill to the second position (U) at the next reversal point of the pendulum movement.

4. Method for the pendulum welding according to claim 1 or 2, wherein residual deflection value (R) is a residual deflection period (Rt) of the programmed path from the first position (S) to the second position (U) at the next reversal point of the pendulum movement.

5. Method for the pendulum welding according to any one of claims 1 to 4, wherein said residual deflection value (R), in particular the residual deflection path (Rx) or the residual deflection duration (Rt) is determined from the current pendulum deflection of the welding tool (18) and the maximum pendulum deflection at the reversal point of the pendulum movement.

6. Method for the self-aligning welding according to claim 5, wherein the actual pendulum deflection of the welding tool (18) in the first position (S) of standstill is determined, in particular measured, is put into a ratio with the maximum pendulum deflection at the reversal point of the pendulum movement, and the delayed braking movement is determined on the basis of this ratio value and the braking movement already executed for reaching the first position (S) at standstill.

7. Method for the pendulum welding according to any one of claims 1 to 6, wherein a second brake profile, modified in comparison with a first brake profile, is modified in its time of starting braking and/or in the duration of its braking movement until standstill.

8. Method for the pendulum welding according to claim 7, wherein the second brake profile, which is modified in relation to the first brake profile, is modified by adapting the start of braking, to be precise in that the time or deflection position value of the original braking movement specified in a robot program is also used for the following braking movement with the changed second brake profile for actuating the robot arm (1a), but taking into account an added offset value which is determined as a function of the residual deflection value (R).

9. Method for the pendulum welding according to any one of claims 1 to 8, in which the pendulum movement transversely to the feed direction is performed.

10. Method for welding according to any of claims 9 to the pendulum, wherein the oscillating movement along the feed direction is performed.

## Revendications

1. Procédé de soudage pendulaire d'au moins une pièce (21) au moyen d'un outil de soudage (18) qui est déplacé automatiquement par rapport à la pièce (21) le long d'une trajectoire programmée par un bras de robot (1a) d'un robot industriel (1) et produit ainsi un cordon de soudure (25) sur la pièce (21), comprenant les étapes en séquence récurrente :
- Exécution d'un mouvement d'avance programmé par le bras du robot (1a) le long de la trajectoire programmée (S1),
- Exécution d'un mouvement pendulaire de l'outil de soudage (18) en synchronisation avec le mouvement d'avance (S2),
characterizé par les étapes :
- Freinage du mouvement d'avance selon un premier profil de freinage dans une période de pendule (P1) jusqu'à un arrêt (S) avant que le mouvement de pendule n'ait atteint son prochain point d'inversion (U) (S3)
- Détermination d'une valeur de déviation résiduelle (R), qui est définie par une première position (S') à l'arrêt et une seconde position (U') au point d'inversion suivant du mouvement pendulaire (S4)
- Freinage du mouvement d'alimentation dans une période de balancement suivante (P2) avec un mouvement de freinage (S5) qui est décéléré en fonction de la valeur de déviation résiduelle (R) d'une période de balancement précédente.

2. Procédé de soudage pendulaire selon la revendication 1, dans lequel le mouvement de freinage retardé est conçu de telle sorte que le mouvement d'avance s'arrête avec une valeur de déviation résiduelle (R) avant le point d'inversion du mouvement pendulaire inférieure à un mouvement d'avance exécuté précédemment d'une période pendulaire précédente (P1).

3. Procédé de soudage pendulaire selon les revendications 1 ou 2, dans lequel la valeur de déviation résiduelle (R) est une trajectoire de déviation résiduelle (Rx) sur la trajectoire programmée menant de la première position (S) à l'arrêt à la deuxième position (U) au point d'inversion suivant du mouvement pendulaire.

4. Procédé de soudage pendulaire selon les revendications 1 ou 2, dans lequel la valeur de déviation résiduelle (R) est une durée de déviation résiduelle (Rt) de la trajectoire programmée menant de la première position (S) à la deuxième position (U) au point d'inversion suivant du mouvement pendulaire.

5. Procédé de soudage pendulaire selon l'une des revendications 1 à 4, dans lequel la valeur de déviation résiduelle (R), en particulier le trajet de déviation résiduelle (Rx) ou la durée de déviation résiduelle (Rt) est déterminée à partir de la déviation pendulaire actuelle de l'outil de soudage (18) et de la déviation pendulaire maximale au point d'inversion du mouvement pendulaire.

6. Procédé de soudage pendulaire selon la revendication 5, dans lequel la déviation pendulaire réelle de l'outil de soudage (18) dans la première position (S) d'arrêt est déterminée, en particulier mesurée, est mise dans un rapport avec la déviation pendulaire maximale au point d'inversion du mouvement pendulaire, et le mouvement de freinage retardé est déterminé sur la base de cette valeur de rapport et du mouvement de freinage déjà exécuté pour atteindre la première position (S) à l'arrêt.

7. Procédé de soudage pendulaire selon l'une des revendications 1 à 6, dans laquelle un deuxième profil de frein, modifié par rapport à un premier profil de frein, est modifié dans son temps de début de freinage et/ou dans la durée de son mouvement de freinage jusqu'à l'arrêt.

8. Procédé de soudage pendulaire selon la revendication 7, dans lequel le deuxième profil de freinage, qui est modifié par rapport au premier profil de freinage, est modifié par une adaptation du début du freinage, à savoir que la valeur de l'instant ou de la position de déviation du mouvement de freinage initial prédéfini dans un programme de robot est également utilisée pour le mouvement de freinage suivant avec le deuxième profil de freinage modifié pour actionner le bras de robot (la), mais en tenant compte d'une valeur de décalage supplémentaire qui est déterminée en fonction de la valeur de déviation résiduelle (R).

9. Procédé de soudage pendulaire selon l'une des revendications 1 à 8, dans laquelle le mouvement pendulaire est effectué transversalement à la direction d'avance.

10. Procédé de soudage pendulaire selon l'une des revendications 1 à 9, dans laquelle le mouvement pendulaire est effectué dans le sens de l'avance.
